# EUROPEAN PATENT APPLICATION

(11) **EP 3 614 533 A1**
(43) Date of publication of application: **26.02.2020**
(21) Application number: 18190014.3
(22) Date of filing: 21.08.2018
(51) Int. Cl.: H02K 3/28, H02K 7/18, H02K 21/12

(54) **CONCENTRATED WINDING LAYOUT FOR A STATOR OF AN ELECTRICAL AC MACHINE**

(71) Applicant: Siemens Gamesa Renewable Energy A/S, 7330 Brande (DK)
(72) Inventor: Soerensen, Ruben Bak, 7080 Borkop (DK); Thougaard, Hans-Joergen, 8600 Silkeborg (DK)
(74) Representative: Aspacher, Karl-Georg

(57) **Abstract**

An electrical AC machine (11) comprises:
a stator (20) having a plurality of teeth (101, 102, 103, 104, 105, 106, 107, 108, 109, 110, 111, 112) alternating with a plurality of slots (1, 2, 3, 4, 5, 6, 7, 8, 9, 10, 11, 12) in a circumferential direction (X),
a concentrated winding layout (100) comprising a plurality of coils (201, 202, 203, 204, 205, 206, 207, 208, 209, 210, 211, 212) wound on the plurality of teeth (101, 102, 103, 104, 105, 106, 107, 108, 109, 110, 111, 112) and belonging to at least six phases (A1, A2, B1, B2, C1, C2), each slot of the plurality of slots (1, 2, 3, 4, 5, 6, 7, 8, 9, 10, 11, 12) housing at least two coils of said plurality of coils (201, 202, 203, 204, 205, 206, 207, 208, 209, 210, 211, 212), each phase (A1, A2, B1, B2, C1, C2) of the at least six phases comprising a first coil (201, 202, 203, 204, 205, 206) and a second coil (207, 208, 209, 210, 211, 212) wound in opposite direction with respect to the respective first coil (201, 202, 203, 204, 205, 206) of the same phase,
a plurality of parallel interconnections (301, 302, 303, 304, 305, 306) connecting the first and second coil of each phase.

## Description

### Field of invention

The present invention relates to a concentrated winding layout for a stator of an electrical AC machine. Particularly, but not exclusively the present invention may relate to a concentrated winding layout for a stator of a generator of a wind turbine. The present invention further relates to a manufacturing method for manufacturing an electrical AC machine including a concentrated winding layout in the stator of the electrical AC machine.

### Art Background

Designing poly-phase AC electric machines with a winding layout having two or more coils per slot requires particular attention in providing an effective electrical insulation system.

Firstly, the machine stator magnet-winding shall be insulated from the stator by an insulation part, commonly annotated ground-wall or main-wall insulation. If the machine is designed for a single-layer (i.e. one coil per slot) winding layout, then main-wall insulation is sufficient - given that the magnet wires/strands are turn-turn insulated.

If the machine is designed with two (double-layer winding layout) or more coil per slot, then it could be needed to add phase separators inside each slot to insulate each phase from one another. The dimensions, in particular the thickness, of the phase separators depends on the maximum voltage difference between the coils belonging to different phases, which are housed next to each other in the same slot and which need therefore to be separated by the phase separator.

The above described problem is particularly relevant in poly-phase AC electric machines having more than three phases. For larger machines such as some generators for offshore wind turbines, the generator windings can be split up in two three phase system (six-phase AC electric machines), fed from two independently voltage converters each producing three-phase sinusoidal waveforms.

The two three phase systems may be typically provided in series to each other and electrically separated by a phase angle of 30° or 60° (any other phase angle shift is possible). Shifting one of the converter systems to produce angle difference from the two presents the opportunity to reduce torque ripple. This method also gives great flexibility in combining the winding configuration of the machine to minimize voltage stresses.

However, in the known poly-phase AC electric machines with concentrated winding layout the voltage difference between phases housed in the same slot is not optimized. Maximum voltage difference may exceed a nominal voltage of the electric machine. This requires the insertion of thick phase separators.

Therefore, in the technical field of poly-phase AC electric machines there is still the need to reduce or eventually eliminate the voltage difference between phases housed in the same slot of the stator, thus also reducing the thickness of the phase separator or eventually eliminating the phase separator.

Smaller phase separators yield to higher slot/copper fill-factors and thereby decrease winding resistance which lowers power dissipation throughout the whole stator.

### Summary of the Invention

The above described need may be met by the subject matter according to the independent claims. Advantageous embodiments of the present invention are described by the dependent claims.

According to a first aspect of the present invention an electrical AC machine is provided, which comprises:
a stator having a plurality of teeth alternating with a plurality of slots in a circumferential direction,
a concentrated winding layout comprising a plurality of coils wound on the plurality of teeth and belonging to at least six phases, each slot of the plurality of slots housing at least two coils of said plurality of coils, each phase of the at least six phases comprising a first coil and a second coil, the second coil of one phase being wound in opposite direction with respect to the respective first coil of the same phase,
a plurality of interconnections connecting the first and second coil of each phase, the interconnections being parallel to each other.

According to a second aspect of the present invention a method of manufacturing an electrical AC machine is provided, which comprises:
providing a stator having a plurality of teeth alternating with a plurality of slots in a circumferential direction,
arranging a concentrated winding layout comprising a plurality of coils wound on the plurality of teeth and belonging to at least six phases, each slot of the plurality of slots housing at least two coils of said plurality of coils, each phase of the at least six phases comprising a first coil and a second coil, the second coil of one phase being wound in opposite direction with respect to the respective first coil of the same phase,
arranging a plurality of interconnections for connecting the first and second coil of each phase, the interconnections being parallel to each other.

In the concentrated winding layout of the present invention the interconnections have all the same length and any crossing between conductors which constitutes the winding layout is avoided.

The electrical AC machine of the present invention may be in particular a permanent magnet synchronous electrical machine. The electrical machine may be or comprise a motor or a generator, in particular a generator included in a wind turbine.

According to embodiments of the present invention, each of the plurality of slots extends radially from a slot top to a slot bottom, each of the interconnections extending between the slot top of one slot to the slot bottom of another slot. Each of the interconnections may extend between two respective slots of a first set of slots alternating in the circumferential direction with a second set of slots, which houses coils not connected by any interconnection.

According to embodiments of the present invention, the concentrated winding layout comprises at least a first set of coils and a second set of coils, respectively corresponding to a first set of three phases and to a second set of three phases of the concentrated winding layout.

In such embodiments, each of the interconnections may extend through six respective teeth and five respective slots.

In such embodiments, the first set of coils is electrically connected in series to the second set of coils. The first set of coils and the second set of coils may electrically separated by a phase angle of 30° or of 60°.

The present invention may be adapted also to a concentrated winding layout having more than six phases.

According to embodiments of the present invention, the first set of coils are wound on a respective first set of teeth and the second set of coils are wound on a respective second set of teeth alternating with the first set of teeth in the circumferential direction.

In particular, according to an embodiment of the present invention, each of the first set of coils wound on the first set of teeth and each of the second set of coils wound on the second set of teeth may comprise, along the circumferential direction, the following arrangement:
- a first coil of a first phase,
- a first coil of a second phase,
- a first coil of a third phase,
- a second coil of the first phase connected to the first coil of the first phase through a first interconnection,
- a second coil of the second phase connected to the first coil of the second phase through a second interconnection,
- a second coil of the third phase connected to the first coil of the third phase through a third interconnection. Each coil of the plurality of coils may wound on a respective tooth of the plurality teeth between a phase input or a neutral output and one interconnection of the plurality of interconnections.

According to embodiments of the present invention, in each of the first set of coils and of the second set of coils, the first coil of the first phase, the first coil of the second phase and the first coil of the third phase are wound in the same direction. Instead, the second coil of the first phase, the second coil of the second phase and the second coil of the third phase may be all wound in the opposite direction with respect to the first coils.

Considering the above scheme, the first set of coils and the second set of coils may be wound in opposite direction, i.e. the first coils of the first set of coils are wound in the opposite direction of the first coils of the second set of coils and the second coils of the first set of coils are wound in the opposite direction of the second coils of the second set of coils.

Embodiments of the present invention are now described with reference to the accompanying drawings. The invention is not restricted to the illustrated or described embodiments.

### Brief Description of the Drawings

Fig. 1 shows a schematic section of a wind turbine including an electrical AC machine according to the present invention;
Fig. 2 shows a schematic diagram of a 6-phase concentrated winding layout according to the present invention;
Fig. 3 shows a voltage vector diagram of the concentrated winding layout of Fig. 2;
Fig. 4 schematically shows a physical arrangement of the of the concentrated winding layout of Figs. 2 and 3;
Fig. 5 shows a slot of a stator of an electrical AC machine according to the present invention.

### Detailed Description

The illustrations in the drawings are schematic. It is noted that in different figures, similar or identical elements are provided with the same reference signs.

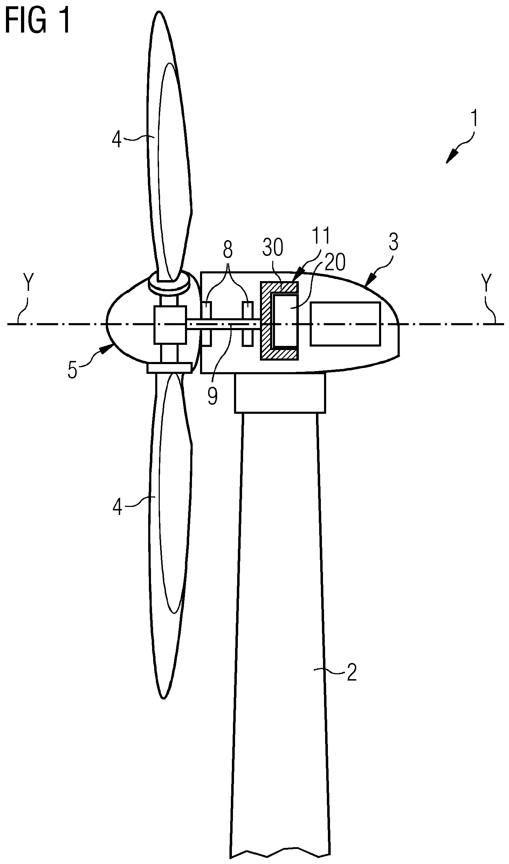

**Figure 1** shows a wind turbine 1 according to the invention. The wind turbine 1 comprises a tower 2, which is mounted on a non-depicted foundation. A nacelle 3 is arranged on top of the tower 2.

The wind turbine 1 further comprises a wind rotor 5 having at least one blade 4 (in the embodiment of Figure 1, the wind rotor comprises three blades 4, of which only two blades 4 are visible). The wind rotor 5 is rotatable around a rotational axis Y.

The blades 4 extend substantially radially with respect to the rotational axis Y.

The wind turbine 1 comprises an electric generator 11, including a stator 20 and a rotor 30. The rotor 30 is rotatable with respect to the stator 20 about the rotational axis Y. The wind rotor 5 is rotationally coupled with the electric generator 11 either directly, e.g. direct drive or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y.

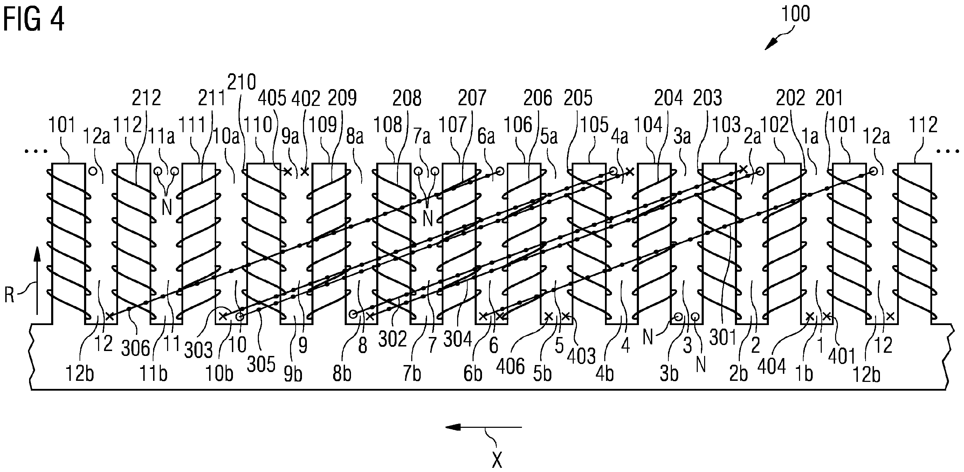

As shown in **Figure 4** the stator 20 has a plurality of teeth 101, 102, 103, 104 , 105, 106, 107, 108, 109, 110, 111, 112 alternating with a plurality of slots 1, 2, 3, 4, 5, 6, 7, 8, 9, 10, 11, 12 in a circumferential direction X of the stator 20, circumferentially orientated with respect to the rotational axis Y.

Each of the plurality of slots 1, 2, 3, 4, 5, 6, 7, 8, 9, 10, 11, 12 extends along a radial direction R, i.e. orthogonally to the the rotational axis Y, from a respective slot bottom 1b, 2b, 3b, 4b, 5b, 6b, 7b, 8b, 9b, 10b, 11b, 12b to a respective slot top 1a, 2a, 3a, 4a, 5a, 6a, 7a, 8a, 9a, 10a, 11a, 12a.

According to the present invention the electric generator 11 includes a concentrated winding layout 100 comprising a plurality of coils 201, 202, 203, 204, 205, 206, 207, 208, 209, 210, 211, 212 wound on the plurality teeth 101, 102, 103, 104, 105, 106, 107, 108, 109, 110, 111, 112 and belonging to at least six phases A1, A2, B1, B2, C1, C2, each slot 1, 2, 3, 4, 5, 6, 7, 8, 9, 10, 11, 12 housing at least two coils, each phase A1, A2, B1, B2, C1, C2 comprising a first coil 201, 202, 203, 204, 205, 206 and a second coil 207, 208, 209, 210, 211, 212, the second coil 207, 208, 209, 210, 211, 212 of one phase being wound in opposite direction with respect to the respective first coil 201, 202, 203, 204, 205, 206 of the same phase. The concentrated winding layout 100 further comprises a plurality of interconnections 301, 302, 303, 304, 305, 306 connecting the first and second coil of each phase, the interconnections 301, 302, 303, 304, 305, 306 being parallel to each other.

The coils 201, 202, 203, 204, 205, 206, 207, 208, 209, 210, 211, 212 and the interconnections 301, 302, 303, 304, 305, 306 carry respective insulations on the respective surfaces.

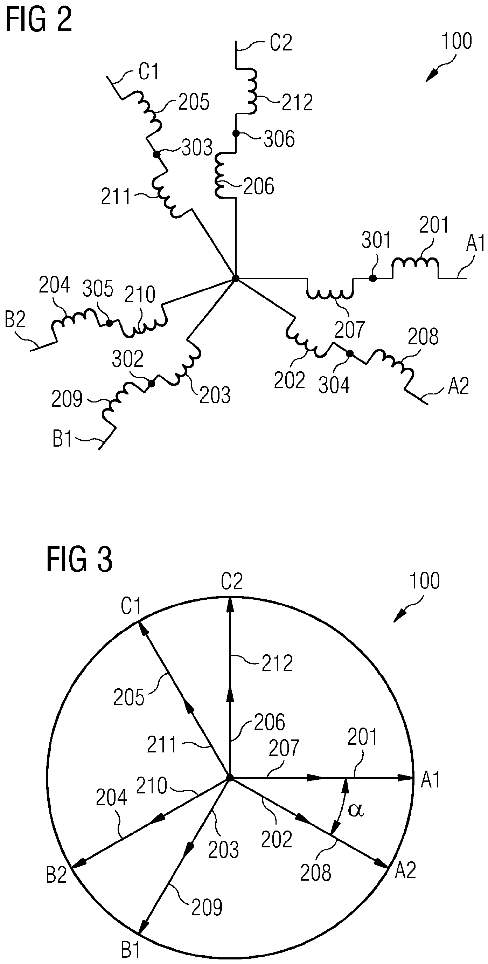

**Figure 2** schematically shows for each phase A1, A2, B1, B2, C1, C2 the respective first coil 201, 202, 203, 204, 205, 206 and second coil 207, 208, 209, 210, 211, 212 as detailed in the following. Each interconnection 301, 302, 303, 304, 305, 306 is schematically represented by a point.

**Figure 3** schematically shows the correspondent voltage vector diagram. The first set of coils 201, 203, 205, 207, 209, 211 are electrically separated from the second set of coils 202, 204, 206, 208, 210, 212 by a phase angle α of 30°.

According to other embodiments of the present invention (not shown), the phase angle α may have any other value, for example 60°.

In the embodiment of the attached **Figures 2** to **4****,** the concentrated winding layout 100 comprises a first set of coils 201, 203, 205, 207, 209, 211 and a second set of coils 202, 204, 206, 208, 210, 212, respectively corresponding to a first set of three phases A1, B1, C1 and to a second set of three phases A2, B2, C2. Each first set of coils 201, 203, 205, 207, 209, 211 and of the second set of coils 202, 204, 206, 208, 210, 212 correspond to a respective three-phase system. The first set of coils 201, 203, 205, 207, 209, 211 is connected through three respective interconnections 301, 302, 303. The second set of coils 202, 204, 206, 208, 210, 212 is connected through three other respective interconnections 304, 305, 306.

According to other embodiments of the present invention (not shown), the concentrated winding layout may include a different number of phases, for example more than two three-phase systems.

The first set of coils 201, 203, 205, 207, 209, 211 is electrically connected in series to the second set of coils 202, 204, 206, 208, 210, 212.

With reference to representation of the winding layout 100 in **Figure 4****,** the first set of coils 201, 203, 205, 207, 209, 211 are wound on a respective first set of teeth 101, 103, 105, 107, 109, 111 and the second set of coils 202, 204, 206, 208, 210, 212 are wound on a respective second set of teeth 102, 104, 106, 108, 110, 112 alternating with the first set of teeth 101, 103, 105, 107, 109, 111 in the circumferential direction X.

The first set of coils 201, 203, 205, 207, 209, 211 comprises, along the circumferential direction X:
- a first coil 201 of a first phase A1,
- a first coil 203 of a second phase B1,
- a first coil 205 of a third phase C1,
- a second coil 207 of the first phase A1 connected to the first coil 201 of the first phase A1 through a first interconnection 301,
- a second coil 209 of the second phase B1 connected to the first coil 203 of the second phase B1 through a second interconnection 302,
- a second coil 211 of the third phase C1 connected to the first coil 205 of the third phase C1 through a third interconnection 303.

The first coils 201, 203, 205 are wound according to a first direction, while the second coils 207, 209, 211 are wound according to a second direction, opposite to the first direction.

According to embodiments of the present invention, the first coils 201, 203, 205 are wound clockwise, while the second coils 207, 209, 211 are wound anticlockwise.

According to other embodiments of the present invention, the first coils 201, 203, 205 are wound anticlockwise, while the second coils 207, 209, 211 are wound clockwise.

More particularly:
- the first coil 201 of the first phase A1 is wound in the first direction on a first tooth 101 of the first set of teeth 101, 103, 105, 107, 109, 111;
- the first coil 203 of the second phase B1 is wound in the first direction on a second tooth 103 of the first set of teeth 101, 103, 105, 107, 109, 111,
- the first coil 205 of the third phase C1 is wound in the first direction on a third tooth 105 of the first set of teeth 101, 103, 105, 107, 109, 111,
- the second coil 207 of the first phase A1 is wound in the second direction on a fourth tooth 107 of the first set of teeth 101, 103, 105, 107, 109, 111,
- the second coil 209 of the second phase B1 is wound in the second direction on a fifth tooth 109 of the first set of teeth 101, 103, 105, 107, 109, 111,
- the second coil 211 of the third phase C1 is wound in the second direction on a sixth tooth 111 of the first set of teeth 101, 103, 105, 107, 109, 111.

In figure 4 the slots 1 - 12 can be identified as a series of slots oriented according to the circumferential direction X from a first slot 1 to a twelfth slot 12.

The first set of coil 201, 203, 205, 207, 209, 211 is connected in the slots 1, 2, 3, 4, 5, 6, 7, 8, 9, 10, 11, 12 in such a way that:
- the first coil 201 of the first phase A1 is wound between an input 401 of the first phase A1, at the slot bottom 1b of the first slot 1, and the first interconnection 301, at the slot top 12a of the twelfth slot 12 (the twelfth slot 12 being adjacent to the first slot 1 in the opposite direction with respect to the circumferential direction X);
- the first coil 203 of the second phase B1 is wound between the second interconnection 302, at the slot top 2a of the second slot 2, and a neutral output N, at the slot bottom 3b of the third slot 3,
- the first coil 205 of the third phase C1 is wound between the third interconnection 303, at the slot top 4a of the fourth slot 4, and an input 403 of the third phase C1, at the slot bottom 5b of the fifth slot 5,
- the second coil 207 of the first phase A1 is wound between a neutral output N, at the slot top 7a of the seventh slot 7, and the first interconnection 301, at the slot bottom 6b of the sixth slot 6,
- the second coil 209 of the second phase B1 is wound between an input 402 of the second phase B1, at the slot top 9a of the ninth slot 9, and the second interconnection 302, at the slot bottom 8b of the eighth slot 8,
- the second coil 211 of the third phase C1 is wound between a neutral output N, at the slot top 11a of the eleventh slot 11, and the third interconnection 303, at the slot bottom 10b of the tenth slot 10.

The second set of coils 202, 204, 206, 208, 210, 212 comprises, along the circumferential direction X:
- a first coil 202 of a first phase A2,
- a first coil 204 of a second phase B2,
- a first coil 206 of a third phase C2,
- a second coil 208 of the first phase A2 connected to the first coil 202 of the first phase A2 through a fourth interconnection 304,
- a second coil 210 of the second phase B2 connected to the first coil 204 of the second phase B2 through a fifth interconnection 305,
- a second coil 212 of the third phase C2 connected to the first coil 206 of the third phase C2 through a sixth interconnection 306.

The first coils 202, 204, 206 are wound according to the second direction, while the second coils 208, 210, 212 are wound according to the first direction.

More particularly:
- the first coil 202 of the first phase A2 is wound in the second direction on a first tooth 102 of the second set of teeth 102, 104, 106, 108, 110, 112;
- the first coil 204 of the second phase B2 is wound in the second direction on a second tooth 104 of the second set of teeth 102, 104, 106, 108, 110, 112,
- the first coil 206 of the third phase C2 is wound in the second direction on a third tooth 106 of the second set of teeth 102, 104, 106, 108, 110, 112,
- the second coil 208 of the first phase A2 is wound in the first direction on a fourth tooth 108 of the second set of teeth 102, 104, 106, 108, 110, 112,
- the second coil 210 of the second phase B2 is wound in the first direction on a fifth tooth 110 of the second set of teeth 102, 104, 106, 108, 110, 112,
- the second coil 212 of the third phase C2 is wound in the first direction on a sixth tooth 112 of the second set of teeth 102, 104, 106, 108, 110, 112.

The second set of coil 202, 204, 206, 208, 210, 212 is connected in the slots 1, 2, 3, 4, 5, 6, 7, 8, 9, 10, 11, 12 in such a way that:
- the first coil 202 of the first phase A2 is wound between an input 402 of the first phase A2, at the slot bottom 1b of the first slot 1, and the fourth interconnection 304, at the slot top 2a of the second slot 2;
- the first coil 204 of the second phase B2 is wound between the fifth interconnection 305, at the slot top 4a of the fourth slot 4, and a neutral output N, at the slot bottom 3b of the third slot 3,
- the first coil 206 of the third phase C2 is wound between the sixth interconnection 306, at the slot top 6a of the sixth slot 6, and an input 406 of the third phase C2, at the slot bottom 5b of the fifth slot 5,
- the second coil 208 of the first phase A2 is wound between a neutral output N, at the slot top 7a of the seventh slot 7, and the fourth interconnection 304, at the slot bottom 8b of the eighth slot 8,
- the second coil 210 of the second phase B2 is wound between an input 405 of the second phase B2, at the slot top 9a of the ninth slot 9, and the fifth interconnection 305, at the slot bottom 10b of the tenth slot 10,
- the second coil 212 of the third phase C2 is wound between a neutral output N, at the slot top 11a of the eleventh slot 11, and the sixth interconnection 306, at the slot bottom 12b of the seventh slot 12.

In both the first set of coils 201, 203, 205, 207, 209, 211 and the second set of coil 202, 204, 206, 208, 210, 212, - each of the interconnections 301, 302, 303, 304, 305, 306 extends between the slot top 12a, 2a, 4a, 6a of one slot 12, 2, 4, 6 to the slot bottom 6b, 8b, 10b, 12b of another slot 6, 8, 10, 12.. This assures that the interconnections 301, 302, 303, 304, 305, 306 are parallel to each other and have the same length.
Each of the interconnections 301, 302, 303, 304, 305, 306 extends through six respective teeth and five respective slots, i.e. each of the interconnections 301, 302, 303, 304, 305, 306 connects two slots which are separated to each other by six respective teeth and five respective slots.

In the winding layout 100 above described, the plurality of slots 1, 2, 3, 4, 5, 6, 7, 8, 9, 10, 11, 12 can be considered divided into comprises a first set of slots 2, 4, 6, 8, 10, 12 and a second set of slots 1, 3, 5, 7, 9, 11 alternating with the first set of slots 2, 4, 6, 8, 10, 12 in the circumferential direction X, each of the interconnections 301, 302, 303, 304, 305, 306 extending between two respective slots of the first set of slots 2, 4, 6, 8, 10, 12. The second set of slots 1, 3, 5, 7, 9, 11 houses the inputs 401, 402, 403, 404, 405, 406 of the phases A1, A2, B1, B2, C1, C2 and the neutral outputs N.
The above described winding layout 100 can be repeated N times (N being an integer or a fraction) upstream the first tooth 101 of the first set of teeth 101, 103, 105, 107, 109, 111 or downstream the twelfth slot 12
"Upstream" and "downstream" are referred to the circumferential direction X.

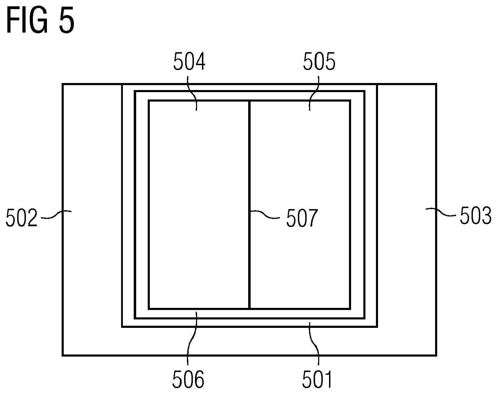

With reference to **Figure 5****,** a slot 501 (corresponding to any of the slots 1, 2, 3, 4, 5, 6, 7, 8, 9, 10, 11, 12 of Figure 4) between two teeth 502 and 503 is shown. The slot 501 houses two adjacent phases 504, 505. A wall insulator 506 is provided between each of the phases 504, 505 and the walls of the teeth 502 and 503. A phase separator 507 oriented radially separates the phases 504, 505 from one another. According to the present invention the thickness of the phase separator 507 can be minimized, as a consequence of the reduction of the voltage difference between the phases 504, 505. Eventually, according to possible embodiment of the present invention, the phase separator 507 is not present the voltage difference between the phases 504, 505 being reduced to a minimum or null value. In such cases the insulation on the surface of the coils of each phase 504, 505 is enough to provide an effective insulation between the phases 504, 505.

## Claims

1. Electrical AC machine (11) comprising:
a stator (20) having a plurality of teeth (101, 102, 103, 104, 105, 106, 107, 108, 109, 110, 111, 112) alternating with a plurality of slots (1, 2, 3, 4, 5, 6, 7, 8, 9, 10, 11, 12) in a circumferential direction (X),
a concentrated winding layout (100) comprising a plurality of coils (201, 202, 203, 204, 205, 206, 207, 208, 209, 210, 211, 212) wound on the plurality of teeth (101, 102, 103, 104, 105, 106, 107, 108, 109, 110, 111, 112) and belonging to at least six phases (A1, A2, B1, B2, C1, C2), each slot of the plurality of slots (1, 2, 3, 4, 5, 6, 7, 8, 9, 10, 11, 12) housing at least two coils of said plurality of coils (201, 202, 203, 204, 205, 206, 207, 208, 209, 210, 211, 212), each phase (A1, A2, B1, B2, C1, C2) of the at least six phases comprising a first coil (201, 202, 203, 204, 205, 206) and a second coil (207, 208, 209, 210, 211, 212), the second coil (207, 208, 209, 210, 211, 212) of one phase being wound in opposite direction with respect to the respective first coil (201, 202, 203, 204, 205, 206) of the same phase,
a plurality of interconnections (301, 302, 303, 304, 305, 306) connecting the first and second coil of each phase, the interconnections (301, 302, 303, 304, 305, 306) being parallel to each other.

2. Electrical AC machine (11) according to claim 1, wherein each of the plurality of slots (1, 2, 3, 4, 5, 6, 7, 8, 9, 10, 11, 12) extends radially from a slot top (1a, 2a, 3a, 4a, 5a, 6a, 7a, 8a, 9a, 10a, 11a, 12a) to a slot bottom (1b, 2b, 3b, 4b, 5b, 6b, 7b, 8b, 9b, 10b, 11b, 12b), each of the interconnections (301, 302, 303, 304, 305, 306) extending between the slot top (12a, 2a, 4a, 6a) of one slot (12, 2, 4, 6) to the slot bottom (6b, 8b, 10b, 12b) of another slot (6, 8, 10, 12).

3. Electrical AC machine (11) according to claim 1 or 2, wherein the plurality of slots (1, 2, 3, 4, 5, 6, 7, 8, 9, 10, 11, 12) comprises a first set of slots (2, 4, 6, 8, 10, 12) and a second set of slots (1, 3, 5, 7, 9, 11) alternating with the first set of slots (2, 4, 6, 8, 10, 12) in the circumferential direction (X), each of the interconnections (301, 302, 303, 304, 305, 306) extending between two respective slots of the first set of slots (2, 4, 6, 8, 10, 12).

4. Electrical AC machine (11) according to any of the previous claims, wherein the concentrated winding layout (100) comprises at least a first set of coils (201, 203, 205, 207, 209, 211) and a second set of coils (202, 204, 206, 208, 210, 212), respectively corresponding to a first set of three phases (A1, B1, C1) and to a second set of three phases (A2, B2, C2) of the concentrated winding layout (100).

5. Electrical AC machine (11) according to claim 4, wherein each of the interconnections (301, 302, 303, 304, 305, 306) extends through six respective teeth and five respective slots.

6. Electrical AC machine (11) according to claim 4 or 5, wherein the first set of coils (201, 203, 205, 207, 209, 211) is electrically connected in series to the second set of coils (202, 204, 206, 208, 210, 212).

7. Electrical AC machine (11) according to claim 6, wherein the first set of coils (201, 203, 205, 207, 209, 211) and the second set of coils (202, 204, 206, 208, 210, 212) are electrically separated by a phase angle (α) of 30° or of 60°.

8. Electrical AC machine (11) according to any of the claims 4 to 7, wherein the first set of coils (201, 203, 205, 207, 209, 211) are wound on a respective first set of teeth (101, 103, 105, 107, 109, 111) and the second set of coils (202, 204, 206, 208, 210, 212) are wound on a respective second set of teeth (102, 104, 106, 108, 110, 112) alternating with the first set of teeth (101, 103, 105, 107, 109, 111) in the circumferential direction (X).

9. Electrical AC machine (11) according to claim 8, wherein each of the first set of coils (201, 203, 205, 207, 209, 211) and of the second set of coils (202, 204, 206, 208, 210, 212) comprises, along the circumferential direction (X):
- a first coil (201, 202) of a first phase (A1, A2),
- a first coil (203, 204) of a second phase (B1, B2),
- a first coil (205, 206) of a third phase (C1, C2),
- a second coil (207, 208) of the first phase (A1, A2) connected to the first coil (201, 202) of the first phase (A1, A2) through a first interconnection (301, 304),
- a second coil (209, 210) of the second phase (B1, B2) connected to the first coil (203, 204) of the second phase (B1, B2) through a second interconnection (302, 305),
- a second coil (211, 212) of the third phase (C1, C2) connected to the first coil (205, 206) of the third phase (C1, C2) through a third interconnection (303, 306).

10. Electrical AC machine (11) according to claim 9, wherein, in each of the first set of coils (201, 203, 205, 207, 209, 211) and of the second set of coils (202, 204, 206, 208, 210, 212) the first coil (201, 202) of the first phase (A1, A2), the first coil (203, 204) of a second phase (B1, B2) and the first coil (205, 206) of a third phase (C1, C2) are wound in the same direction.

11. Electrical AC machine (11) according to claim 10, wherein the first coil (201) of the first phase (A1) of the first set of coils (201, 203, 205, 207, 209, 211) is wound in the opposite direction of the first coil (202) of the first phase (A2) of the second set of coils (202, 204, 206, 208, 210, 212) .

12. Electrical AC machine (11) according to any of the previous claims, wherein each coil of the plurality of coils (201, 202, 203, 204, 205, 206, 207, 208, 209, 210, 211, 212) is wound on a respective tooth of the plurality teeth (101, 102, 103, 104, 105, 106, 107, 108, 109, 110, 111, 112) between a phase input (401, 402, 403, 404, 405, 406) or a neutral output (N) and one interconnection of the plurality of interconnections (301, 302, 303, 304, 305, 306).

13. Wind turbine comprising an electrical generator (11) according to any of the previous claims.

14. Method of manufacturing an electrical AC machine (11) comprising:
providing a stator (20) having a plurality teeth (101, 102, 103, 104, 105, 106, 107, 108, 109, 110, 111, 112) alternating with a plurality of slots (1, 2, 3, 4, 5, 6, 7, 8, 9, 10, 11, 12) in a circumferential direction (X),
arranging a concentrated winding layout (100) comprising a plurality of coils (201, 202, 203, 204, 205, 206, 207, 208, 209, 210, 211, 212) wound on the plurality teeth (101, 102, 103, 104, 105, 106, 107, 108, 109, 110, 111, 112) and belonging to at least six phases (A1, A2, B1, B2, C1, C2), each slot of the plurality of slots (1, 2, 3, 4, 5, 6, 7, 8, 9, 10, 11, 12) housing at least two coils of said plurality of coils (201, 202, 203, 204, 205, 206, 207, 208, 209, 210, 211, 212), each phase (A1, A2, B1, B2, C1, C2) of the at least six phases comprising a first coil (201, 202, 203, 204, 205, 206) and a second coil (207, 208, 209, 210, 211, 212), the second coil (207, 208, 209, 210, 211, 212) of one phase being wound in opposite direction with respect to the respective first coil (201, 202, 203, 204, 205, 206) of the same phase,
arranging a plurality of interconnections (301, 302, 303, 304, 305, 306) for connecting the first and second coil of each phase, the interconnections (301, 302, 303, 304, 305, 306) being parallel to each other.

15. Method according to the preceding claim, wherein the concentrated winding layout (100) comprises at least a first set of coils (201, 203, 205, 207, 209, 211) and a second set of coils (202, 204, 206, 208, 210, 212) electrically connected in series with the first set of coils (201, 203, 205, 207, 209, 211), respectively corresponding to a first set of three phases (A1, B1, C1) and to a second set of three phases (A2, B2, C2) of the concentrated winding layout (100), the first set of coils (201, 203, 205, 207, 209, 211) and the second set of coils (202, 204, 206, 208, 210, 212) being electrically separated by a phase angle (α) of 30° or of 60°.
